# EUROPEAN PATENT APPLICATION

(11) **EP 2 216 755 A2**
(43) Date of publication of application: **11.08.2010**
(21) Application number: 10153231.5
(22) Date of filing: 10.02.2010
(51) Int. Cl.: G07C 5/08

(54) **A method and system for vehicle monitoring**

(30) Priority: 10.02.2009 GB 0902163
(71) Applicant: Airmax Group Plc, Verwood, Dorset, BH31 6BE (GB)
(72) Inventor: Duddle, Ashley Robert, Fareham Hampshire PO14 1NN (GB); Perham, Stephen Henry, Walton-on-Thames Surrey KT12 3QD (GB)
(74) Representative: Lawrence, John

(57) **Abstract**

This invention concerns a system for vehicle monitoring comprising a processor (2) arranged to receive signals from sensors (3A to 3G) monitoring a vehicle (4). The sensors (3A to 3G) monitor at least one variable indicative of whether the vehicle (4) has executed a manoeuvre changing lanes and a variable indicative of activation of a directional indicator of the vehicle (4). The processor (2) is further arranged to determine from the signals whether the directional indicator is activated during a manoeuvre in which the vehicle changes lanes and causes a report to be generated.

## Description

This invention relates to a method and system for vehicle monitoring and, in particular, but not exclusively, a method and system for vehicle monitoring to determine driver behaviour when changing lanes.

According to a first aspect of the invention, there is provided a system for vehicle monitoring comprising a processor that is arranged to receive signals from sensors monitoring a vehicle, the sensors monitoring at least one variable indicative of whether the vehicle has executed a manoeuvre changing lanes and a variable indicative of activation of the directional indicator, determine from these signals whether the directional indicator is activated during a manoeuvre in which the vehicle changes lanes and cause a report to be generated.

It will be understood that the term "signals from a sensor" includes the processor being arranged to receive the actual signals generated by sensors monitoring the vehicle and the processor being arranged to receive signals that are indicative of those generated by the sensors monitoring the vehicle.

The report may be an alarm, such as a warning indicator, that is activated if it is determined by the processor that the vehicle is executing a manoeuvre to change lanes without the directional indicator being activated. The alarm may be located in the vehicle and is for warning the driver that he/she is changing lanes without activating the directional indicators.

Alternatively, the report may be a historical record of whether the directional indicator is activated during manoeuvres in which the vehicle changes lanes. The processor may store the historical record in memory, transmit the record to a predefined target, such as email the record to a predefined email address, and/or be arranged to, on request, display at least a portion of the report to a user. The historical record may be displayed on a computer screen and/or as a printed copy.

The processor may receive signals wirelessly from a transmitter located within a vehicle and connected to the sensors. The transmitter may be connected to the on board diagnostic system (OBD) of the vehicle and the processor receives via the transmitter the raw data from the OBD.

Alternatively, the system may comprise a wired connection connecting the sensors to the processor such that the processor can receive signals therefrom. The processor may be directly connected to the sensors but preferably is connected to the sensors via the OBD. In one embodiment, the system is for permanently mounting in the vehicle.

The sensors monitoring at least one variable indicative of whether the vehicle has executed a manoeuvre changing lanes may comprise one or more cameras arranged to record an image of the road in front and/or behind the vehicle, the processor arranged to analyse the images recorded by the camera to determine whether the vehicle has executed a manoeuvre changing lanes.

Alternatively or additionally, the sensors monitoring at least one variable indicative of whether the vehicle has executed a manoeuvre changing lanes may comprise other types of sensor, for example, motion sensors that monitor the velocity and acceleration of the car and/or sensors that monitor the angle of the turning wheel of the vehicle and the processor is arranged to determine from signals generated from these sensors when it is likely that a manoeuvre changing lanes has been executed.

The processor may cause a report to be generated immediately on determining that the directional indicator is not activated during a manoeuvre in which the vehicle changes lanes, periodically or on request. In one embodiment, the processor causes a report to be generated when the number of times the directional indicator is not activated during a manoeuvre in which the vehicle changes lanes is greater than a predetermined amount within a certain time period, for example more than 15 times in 20 minutes.

According to another aspect of the invention there is provided a vehicle comprising a comprising sensors monitoring at least one variable indicative of whether the vehicle has executed a manoeuvre changing lanes and a variable indicative of activation of the vehicle directional indicator and a processor arranged to receive signals from the sensors and determine from these signals whether the directional indicator is activated during a manoeuvre in which the vehicle changes lanes and cause an alarm to be activated if it is determined that the vehicle is executing a manoeuvre to change lanes without the directional indicator being activated and/or to transmit results of the determination to a terminal off-board the vehicle.

The results of the determination may be transmitted to a terminal off-board the vehicle wirelessly.

According to a further aspect of the invention there is provided a data carrier having encoded thereon instructions that when executed by a processor cause the processor to receive signals indicative of signals from sensors monitoring a vehicle, the sensors monitoring at least one variable indicative of whether the vehicle has executed a manoeuvre changing lanes and a variable indicative of activation of the directional indicator, determine from these signals whether the directional indicator is activated during a manoeuvre in which the vehicle changes lanes and cause a report to be generated.

According to yet another aspect of the invention there is provided a method comprising determining how many times a driver changes lanes without activating the directional indicators within a set period and taking suitable action based on the determination.

The suitable action may be generating and storing a report of the determination.

In one embodiment, the method is a method of calculating insurance premiums and the suitable action is adjusting the insurance premium of the driver.

Preferably, the insurance premium is for car insurance, however in other embodiments, the insurance premium is for other types of insurance, such as life or health insurance.

In another embodiment, the method is a method of managing a driver and the appropriate action is one or more of disciplining the driver, rewarding the driver and training the driver.

Embodiments of the invention will now be described, by example only, with reference to the accompanying drawings, in which:-
Figure 1 shows a side view of a vehicle in accordance with the invention;
Figure 2 shows a schematic view of a system in accordance with the invention;
Figure 3 shows a vehicle in accordance with the invention, in use;
Figure 4 shows a report in accordance with one embodiment of the invention; and
Figure 5 shows a report in accordance with another embodiment of the invention.

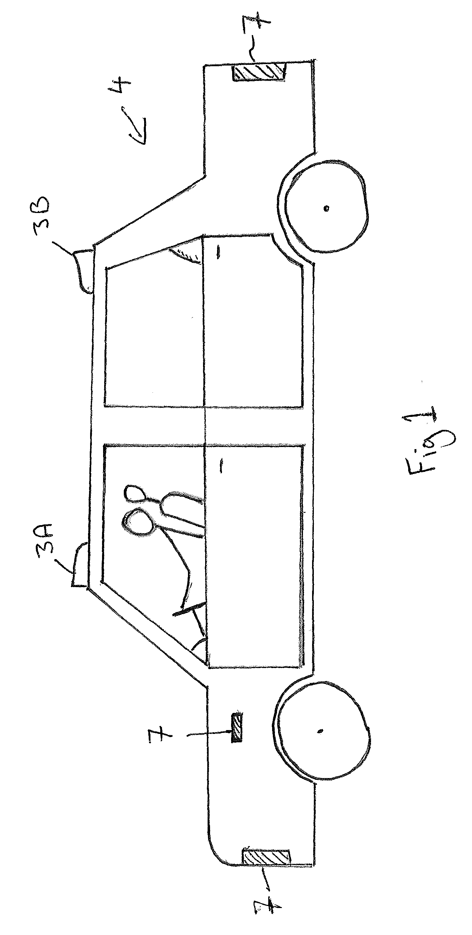

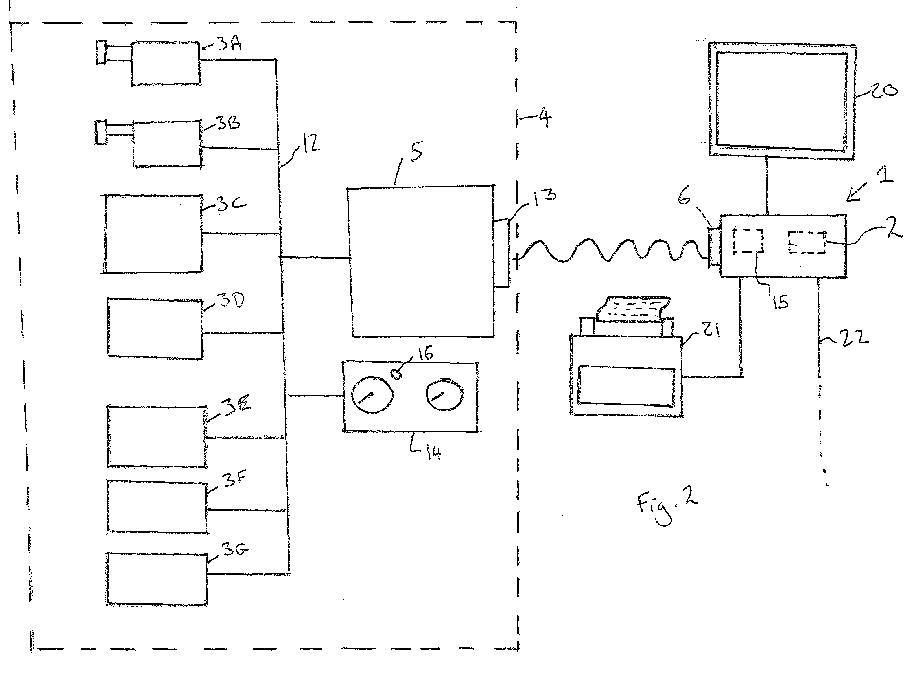

Referring to Figures 1 and 2, a system 1 for vehicle monitoring in accordance with the invention comprises comprising a processor 2 that is arranged to receive signals from sensors 3A to 3G monitoring a vehicle 4. In this embodiment, the system 1 receives the signals via by wireless communication from an OBD 5 of the vehicle 4 that is connected to the sensors 3A to 3F by a vehicle bus 12. In this embodiment, a transmitter 13 connected with the OBD 5 transmits the signals to a receiver 6 of system 1.

However, in an alternative embodiment, data from OBD 5 is downloaded on a regular basis by connecting a terminal (not shown) to an interface in the vehicle 4 and loaded onto system 1 from the terminal.

The sensors 3A to 3E monitor at least one variable indicative of whether the vehicle has executed a manoeuvre changing lanes. In this embodiment, the vehicle 4 comprises cameras 7 and 8 for monitoring the road ahead and behind the vehicle 4 respectively, an accelerometer 9, a speedometer 10 and a tachometer 11. As will be appreciated the invention is not limited to specific sensor set but any individual or combination of sensors may be used from which can be deduced whether the vehicle has executed a manoeuvre changing lanes.

The vehicle 1 also comprises a sensor 3F for monitoring a variable indicative of activation of the directional indicator, for example a sensor that monitors the presence of power signals activating the directional indicators or operation of a switch, such as an indicator control arm, for activating the directional indicators. The latter may be preferable as the former may require a distinction to be made between activation of the directional indicators to indicate an intention to turn left or right and activation of the directional indicators on both sides of the car simultaneously as a warning.

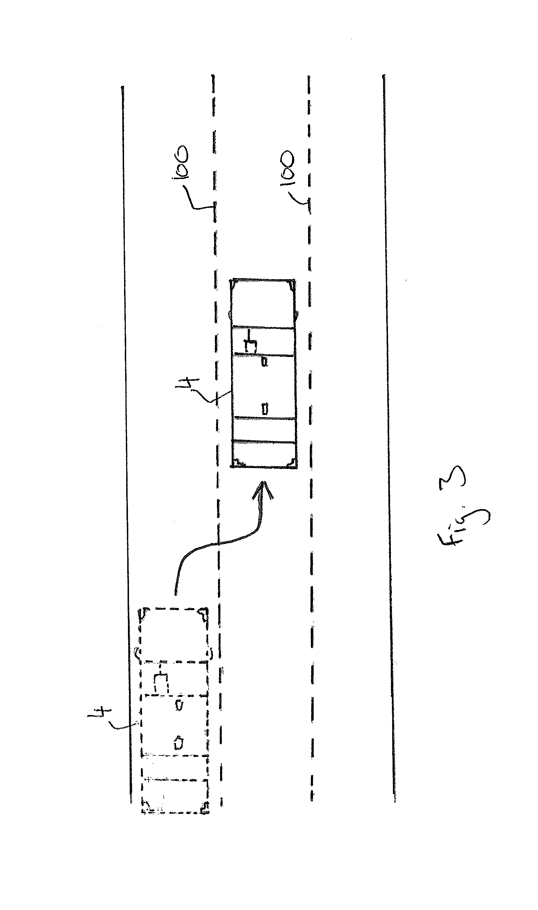

Processor 2, on receiving the signals from the OBD, determines from these signals whether the vehicle has executed a manoeuvre changing lanes and whether during such a manoeuvre the directional indicator was activated. The processor 2 may determine whether vehicle 4 has changed lanes by analysing the images received from cameras 3A and 3B and determining whether the vehicle 4 has crossed lines 100 (see Figure 3) on the road that act to divide the road into different lanes. Alternatively or additionally, the processor 2 may determine whether the vehicle has executed a manoeuvre changing lanes if it receives signals characteristic of such a manoeuvre from the accelerometer 3C, speedometer 3D and tachometer 3E.

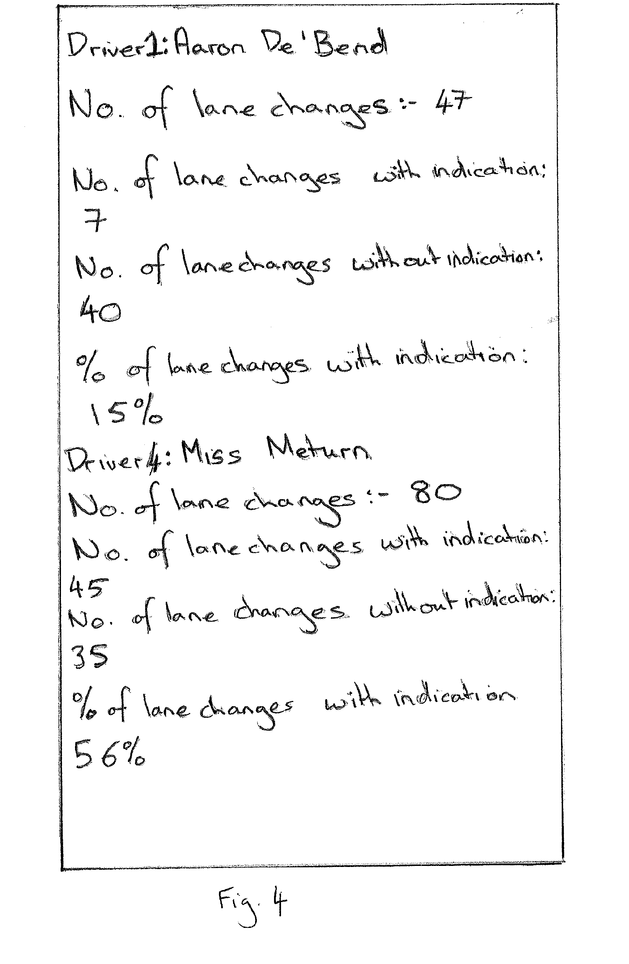

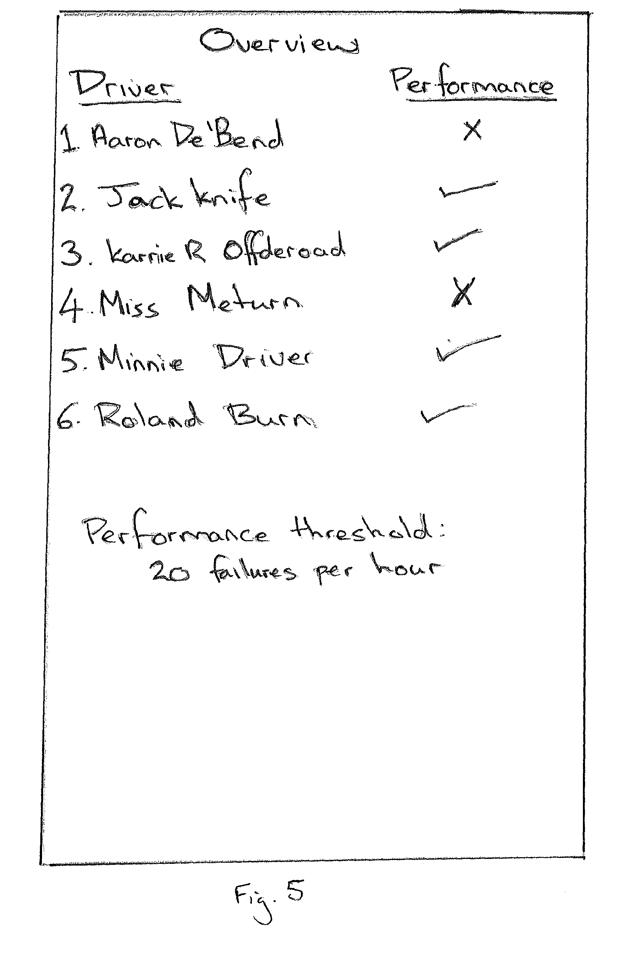

The processor 2 causes this information to be stored in memory 15 and generates a report (as shown in Figures 4 and 5). This report may be generated "live", i.e. concurrently with the processing of the data, periodically, for example weekly or monthly, on request or in response to specific results being determined, for example the performance of a driver violating a threshold of acceptable performance.

The report may take a number of forms. In the embodiment shown in Figure 4, a report is generated for a fixed period, such as daily, and associates each driver's name with statistics for that driver for that day, for example, the number of lanes changes, the number of lane changes with and without indication and the percentage of lane changes with indication.

In the embodiment shown in Figure 5, the processor 2 is programmed with a threshold for the number or percentage of lane changes without indication within a particular time period and a report is generated with each driver's name and a tick or a cross, or other suitable indication, to indicate whether the driver's performance is above or below the threshold. In this case the threshold is 20 lane changes without indication per hour. The processor may be arranged to allow the user to alter the threshold.

Alternatively, a report may be generated that only lists the drivers whose performance is above or below the threshold.

This report can be reviewed by a supervisor, insurance broker, etc to determine the performance of the driver during that period. Suitable action can then be taken based on the recorded performance, for example the driver's supervisor could send the driver on a training course if his performance is below a required level or an insurance broker can assess the risk a driver poses and alter the driver's insurance premium appropriately based on the determined level of risk.

The reports may be generated periodically, such as daily, weekly or monthly, or a report for a specific driver may be generated when that driver's performance reaches a particular threshold, for example, when the number of lanes changes without indication within a particular time period increases above a predetermined threshold.

The reports may be generated on a display 20, a hardcopy via a printer 21 or by being sent to further communication devices (not shown) via a communication link 22. For example, the report could be emailed to a specified email account.

In an alternative embodiment, the system 1 is provided onboard, as opposed to off-board, the vehicle 4. In such an embodiment, the OBD may be connected via the bus 12 to a display 14 of the vehicle 4 that has a warning light 16 and the system 1 causes the warning light 16 to be activated of the driver is executing a manoeuvre changing lanes without activating the directional indicators. In this way, the driver is warned of potentially dangerous driving and can activate the directional indicators for the present or future lane changes.

## Claims

1. A system for vehicle monitoring comprising a processor that is arranged to receive signals from sensors monitoring a vehicle, the sensors monitoring at least one variable indicative of whether the vehicle has executed a manoeuvre changing lanes and a variable indicative of activation of the directional indicator, determine from these signals whether the directional indicator is activated during a manoeuvre in which the vehicle changes lanes and cause a report to be generated.

2. A system according to claim 1, wherein the report is an alarm that is activated if it is determined by the processor that the vehicle is executing a manoeuvre to change lanes without the directional indicator being activated, and optionally or preferably
the alarm is located in the vehicle and is for warning the driver that he/she is changing lanes without activating the directional indicators.

3. A system according to claim 1, wherein the report is a historical record of whether the directional indicator is activated during manoeuvres in which the vehicle changes lanes, and optionally or preferably
the processor stores the historical record in memory, transmits the record to a predefined target and/or is arranged to, on request, display at least a portion of the report to a user.

4. A system according to any one of the preceding claims, wherein the processor receives signals wirelessly from a transmitter located within a vehicle and connected to the sensors.

5. A system according to claim 4, wherein the transmitter is connected to the on board diagnostic system (OBD) of the vehicle and the processor receives via the transmitter the raw data from the OBD.

6. A system according to any one of claims 1 to 3, comprising a wired connection connecting the sensors to the processor such that the processor can receive signals therefrom.

7. A system according to claim 6, wherein the processor is directly connected to the sensors.

8. A system according to claim 7, wherein the processor is connected to the sensors via the OBD.

9. A system according to any one of the preceding claims, wherein the sensors monitoring at least one variable indicative of whether the vehicle has executed a manoeuvre changing lanes comprise one or more cameras arranged to record an image of the road in front and/or behind the vehicle, the processor arranged to analyse the images recorded by the camera to determine whether the vehicle has executed a manoeuvre changing lanes.

10. A system according to any one of the preceding claims, wherein the sensors monitoring at least one variable indicative of whether the vehicle has executed a manoeuvre changing lanes comprise motion sensors that monitor the velocity and acceleration of the car and/or sensors that monitor the angle of the turning wheel of the vehicle and the processor is arranged to determine from signals generated from these sensors when it is likely that a manoeuvre changing lanes has been executed.

11. A system according to any one of the preceding claims, wherein the processor causes a report to be generated immediately on determining that the directional indicator is not activated during a manoeuvre in which the vehicle changes lanes, periodically or on request.

12. A system according to any one of claims 1 to 10, wherein the processor causes a report to be generated when the number of times the directional indicator is not activated during a manoeuvre in which the vehicle changes lanes is greater than a predetermined amount within a certain time period.

13. A vehicle comprising a comprising sensors monitoring at least one variable indicative of whether the vehicle has executed a manoeuvre changing lanes and a variable indicative of activation of the vehicle directional indicator and a processor arranged to receive signals from the sensors and determine from these signals whether the directional indicator is activated during a manoeuvre in which the vehicle changes lanes and cause an alarm to be activated if it is determined that the vehicle is executing a manoeuvre to change lanes without the directional indicator being activated and/or to transmit results of the determination to a terminal off-board the vehicle.

14. A vehicle according to claim 13, wherein the results of the determination are transmitted to a terminal off-board the vehicle wirelessly.

15. A data carrier having encoded thereon instructions that when executed by a processor cause the processor to receive signals indicative of signals from sensors monitoring a vehicle, the sensors monitoring at least one variable indicative of whether the vehicle has executed a manoeuvre changing lanes and a variable indicative of activation of the directional indicator, determine from these signals whether the directional indicator is activated during a manoeuvre in which the vehicle changes lanes and cause a report to be generated.
